# EUROPEAN PATENT APPLICATION

(11) **EP 1 662 710 A2**
(43) Date of publication of application: **31.05.2006**
(21) Application number: 05110541.9
(22) Date of filing: 09.11.2005
(51) Int. Cl.: H04L 12/28, H04N 7/24

(54) **Device and method for distributing broadcast services on a local network**

(30) Priority: 25.11.2004 FR 0412538
(71) Applicant: Thomson Licensing, 92100 Boulogne-Billancourt (FR)
(72) Inventor: Schaefer, Ralf, 92648 BOULOGNE CEDEX (FR); Delaunay, Christophe, 92648 BOULOGNE CEDEX (FR); Champel, Mary-Luc, 92648 BOULOGNE CEDEX (FR)
(74) Representative: Le Dantec, Claude

(57) **Abstract**

The invention allows a user, wanting to receive, on the one hand, a digital television offer broadcast in a conventional manner, and, on the other hand, an offer of video services on an IP network, to have a conventional receiving device capable of redistributing on the local network the services that he receives. This receiver will therefore be seen on the network as an additional source of IP services. The conventional service offer will be incorporated into the IP services offer.

## Description

The present invention relates to the field of digital television and more precisely its distribution in the home. Just as the transmission of digital television services via satellite, cable or even terrestrial transmission is now widespread, so the distribution of the same services via an IP type network is in its early stages. It is appropriate to propose solutions allowing the harmonious coexistence in the home of this distribution of digital television services on IP networks with more conventional transmission by satellite or other means.

With the emergence of video over IP distribution offers, new devices are required by the user to take advantage of these offers. A user wishing to take advantage nowadays of both a conventional offer of the satellite, cable or even microwave offer and a video over IP offer will have to have two types of devices. On the one hand, he will have to be equipped with a decoder suitable for receiving the conventional offer usually coupled directly to a service viewing device of the television type. On the other hand, he will have to equip himself with a gateway between a network for distribution of services over IP, Internet or other means, and a local network equipping the home and to which at least one viewing device, digital television, personal computer or other device, will be connected.

The operating scheme of the conventional offer is as follows. Digital services operators each have a service offer. These services are grouped together in a set of services. Each set consists of one or more digital data streams. These streams are distributed via a broadcast link which may correspond to a given frequency emitted by a satellite or a cable network head. Each stream will be able to contain one or more services. A decoder is fitted with a tuner allowing it to connect to the satellite, or the cable, by using the given frequency and to receive the digital data stream that is broadcast thereon. A service within this stream is defined as a sequence of transmissions broadcast in the context of a schedule defined by a broadcaster.

The video over IP offers may be divided into two groups, the services distributed as unicast services and the services distributed as multicast services. In the first, a service will be distributed by a server to a single receiver, while the second are designed as a simultaneous distribution by a server to multiple receivers.

The operation of multicast distribution services over IP involves a service provider who will distribute these services. Each service will be distributed by one or more servers using a multicast distribution address. There are several ways for a service provider to bring his offer to the notice of the users. On the user's premises, the receiver must initially be notified of the services and of the addresses to which they are distributed. It constructs a list thereof that it may then propose to the user who will select the service that he wishes to receive. The receiver will then send a subscription request to the distribution address used by the service. This subscription request will cause the intermediate routing devices to be configured between the server and the receivers. The latter will route the data packets constituting the stream comprising the service from the server to the receiver. When the user wishes to stop receiving the service, the receiver will send an unsubscribe request to the address and will stop receiving the packets.

This complete process is usually called SD&S or Service Discovery and Selection. There is a standard covering this process called DVB-IP (Digital Video Broadcasting over IP Infrastructures), documented in "DVB-IP Phase 1 Specifications Handbook" available from the ETSI, reference ETSI TS 102.034 v1.1.1).

It can be seen therefore that a user wishing to obtain a digital television offer broadcast conventionally and a service offer distributed over IP will find himself with a receiver connected to a local network over IP itself connected to an IP service distribution network via a gateway, and a conventional decoder allowing him to receive an offer, for example satellite, on his receiver. He will therefore have to use two different and incompatible systems.

The invention allows a user wishing to receive, on the one hand, a digital television offer broadcast conventionally and, on the other hand, a video services offer over an IP network to have a conventional reception device fitted with the capability to redistribute the services he receives over the local network. This receiver will therefore be seen on the network as an additional source of services over IP. The conventional service offer will be incorporated into the offer of services over IP.

The invention relates to a digital services reception device comprising means of receiving at least one set of digital services broadcast by satellite and/or by cable and/or by terrestrial transmission and means of connection to a local IP network and means of distributing at least one digital data stream containing at least one digital service over the local IP network (3.5) to one or more clients connected to this network, these means of distributing at least one stream being suitable for transmitting in the distributed stream at least one service received via the reception means.

According to a particular embodiment of the invention, the device also comprises means of presenting a list of digital services offered on the local network suited to the mode of presenting the list of offered servi ces used on this network.

According to a particular embodiment of the invention, the means of presenting an offer of digital services comprise means of determining the list of services offered by the at least one set of digital services capable of being received via the reception means and means of adapting this list of offered services to the mode of presentation used on the local network.

According to a particular embodiment of the invention, the device also comprises means of receiving a command, called a "setup" command, from a client connected to the local network, to request the transmission over the local network of a service originating from the list of services presented by the presentation means and a command, called a "teardown" command, indicating that the client is no longer interested in the transmission of the said service.

According to a particular embodiment of the invention, since the reception means do not have the capability of receiving simultaneously all the services offered by the at least one set of digital services, the adaptation means comprise means of selecting, at any moment, from the list of all the services offered, services that may be received without requiring the interruption of the reception of services already received and in which the means of presentation are suitable for presenting only the selected services.

According to a particular embodiment of the invention, the device also has means of maintaining a list of digital services received and distributed and, for each distributed service, means of maintaining the list of clients intended to receive the said service.

The invention also relates to a method of distributing at least one digital service over a local network of the IP type by a device comprising means of distributing at least one stream containing at least one digital service on the local network to one or more clients connected to this network, means of receiving at least one offer of digital services broadcast by satellite and/or by cable and/or by terrestrial transmission and the means of distributing at least one stream are suitable for transmitting in the distributed stream at least one service received via the reception means, the reception means comprising the following steps:
- a step of receiving at least one digital service via the said reception means;
- a step of distributing at least one service received by the said distribution means on the local network.

According to a particular embodiment of the invention, the device also comprising means of presenting a list of digital services offered on the local network, the method also comprises a step of presenting a list of digital services offered on the local network according to the mode of presenting the services used on this network.

According to a particular embodiment of the invention, the method also comprises a step of determining the list of services offered by the at least one set of digital services and the adaptation of this list to the presentation mode used on the local network.

According to a particular embodiment of the invention, the method also comprises a step of receiving a command, called a "setup" command, from a client connected to the local network to request the transmission on the local network of a service originating from the list of services presented and indicated in the command.

According to a particular embodiment of the invention, the method also comprises, on receipt of the "setup" command, a step of maintaining a list of digital services received and distributed and, for each service distributed, a step of maintaining the list of clients intended to receive the said service.

According to a particular embodiment of the invention, the method also comprises, on receipt of the "setup" command, a step of controlling the reception means to receive the requested service and a step of distributing this service on the local network.

According to a particular embodiment of the invention, the method comprises, on receipt of the "setup" command, a step of verifying that, in the case in which at least one previous service is already received by the reception means and distributed by the distribution means, the reception means can be controlled so as to allow the additional reception of the requested service and of the at least one previous service received and, if this test is negative, to signify the failure of his command to the client originating the "setup" command.

According to a particular embodiment of the invention, the method comprises a step, during the determination of the list of services offered by the at least one set of digital services and, in the case in which at least one service is already received by the reception means and distributed by the distribution means, of selecting from this list the only services that can be received in addition to the at least one service already received.

According to a particular embodiment of the invention, the method also comprises a step of receiving a command, called a "teardown" command, from a client connected to the local network and intended to receive at least one distributed digital service, indicating that he ceases to be the intended recipient of the digital service indicated in the command.

According to a particular embodiment of the invention, the method also comprises a step, on receipt of the "teardown" command, of maintaining a list of received and distributed digital services, and, for each distributed service, a step of maintaining the list of clients intended to receive the said service.

The invention will be better understood, and other features and advantages will appear on reading the following description, the description making reference to the appended drawings amongst which:
Figure 1 represents the overall architecture of an exemplary embodiment of the invention in its operating environment.
Figure 2 represents the hardware architecture of a device according to the exemplary embodiment of the invention.
Figure 3 represents a functional diagram of a device according to the exemplary embodiment of the invention.

The emergence of new video over IP offers makes it necessary for the user to acquire new devices. Currently, a user wishing to benefit from a conventional offer such as satellite, cable or microwave digital and an offer over IP must have devices that operate differently. The exemplary embodiment of the invention proposes a means by which the user can access the services of the two offers in a uniform and transparent manner.

The adopted solution must take account of the following criteria for it to be effective. On the one hand, the bandwidth used on the user's local network must be as narrow as possible, on the other hand, the network resources necessary must be as few as possible. The choice of a service by the user must be as natural as possible and this must be irrespective of the primary means of routing the service. Ideally, the user should see all the services available to him and be able to choose one of them without being concerned with the offer that gives him access to this service.

Access to a video over IP offer involves the creation in the user's home of a local network over IP, even though it is an embryonic one. As a minimum, a device will play the role of gateway offering the connection to the IP network distributing the services. This access gateway will receive the data streams containing the services that are to be decoded and viewed. It can be imagined that this gateway comprises directly the decoder and produces the signal adapted to be viewed on the receiver. But usually, the decoder will be a different device connected via IP to the gateway and may even be incorporated into the receiver, for example a digital television.

In this document, the term "transmission" will be reserved for the conventional transmission of digital services via satellite, cable or terrestrial transmission or other means, whereas the term "distribution" will be reserved for the distribution of services over an IP network.

The exemplary embodiment of the invention is based on a device, which will be called a distribution gateway, which makes it possible to receive a first conventional offer of digital service broadcasting and makes it accessible on a local network. This device is fitted out to receive a transmission of the satellite, cable, microwave digital or other type. This device is also capable of supplying on the local network information on the services offered by the transmission but in the form adopted by the local network for notifying the user of the services over IP offer. When the user chooses a service from the broadcast offer, the distribution gateway transmits the broadcast service over the IP network in the same way as a services over IP distribution server. In this manner, the user will be able to access the services of the broadcast offer in the same way as if that offer were an integral part of the services over IP offer. This distribution gateway may be designed as a separate device on the IP network or as an extension of the gateway for connection to the IP network, even, where necessary, integrated into a digital receiver. It is evident for those skilled in the art that the integration of this functionality may be carried out at various locations on the local network and within various devices of this network.

An exemplary embodiment of the invention will now be described. This exemplary embodiment is non-limiting and those skilled in the art will be able to adapt certain aspects thereof without departing from the context of the invention.

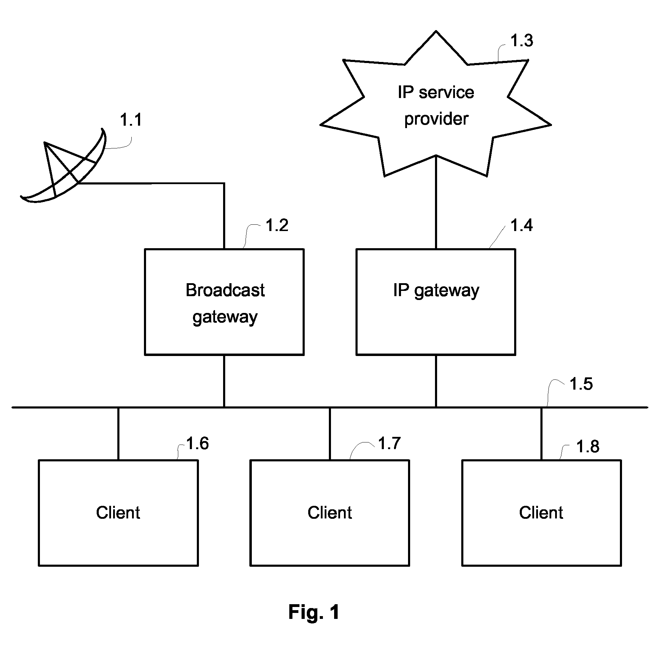

Figure 1 illustrates the overall architecture of an exemplary embodiment of the invention in its operating environment. It shows a local network over IP, reference number 1.5, connecting on the one hand the clients, reference numbers 1.6 to 1.8, to a services over IP distribution network. A client is called the device used to receive a digital data stream containing a service originating from an IP network. This device is therefore the device that will be capable of receiving and decoding the stream over IP. This device will usually be an IP decoder which will be fitted with an IP network interface and a demultiplexer used to isolate the data packets corresponding to a service, then with a decoder capable of decoding the various elementary streams constituting the service and finally with digital analogue converters used to create the analogue signals that will be transmitted to a screen, loudspeakers or other elements for restoring the service. The device may also be a digital television incorporating directly all these functions. These clients are going to be connected to the services over IP distribution network via an IP gateway, reference number 1.4, which may for example be an ADSL modem or any other means of accessing an IP network with a sufficient data rate for the distribution of audio and video services, cable modem, satellite modem, dedicated link, etc.

In the exemplary embodiment of Figure 1, the distribution gateway is constructed as a device in itself, reference number 1.2, connected on the one hand to the local IP network and having a reception module connected to a satellite antenna, reference number 1.1. This reception module is a satellite module in the exemplary embodiment, but could be a cable, microwave or other reception module to the extent that it receives digital data streams, typically DVB (Digital Video Broadcast).

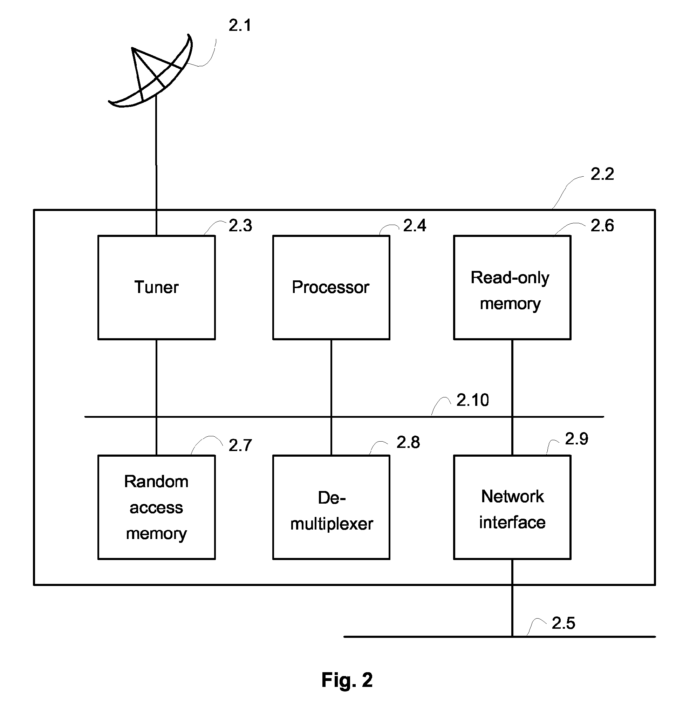

Figure 2 for its part illustrates the hardware architecture of the distribution gateway, reference number 2.2, of the exemplary embodiment. This gateway is connected to the IP network, reference number 2.5, via a network interface, reference number 2.9. It has a reception module, reference number 2.3 and usually called a tuner in the jargon of those skilled in the art. This tuner receives signals originating from the satellite and captured by the satellite antenna, reference number 2.1. This tuner may be set to a given frequency, capture the signal transmitted at that frequency and reconstruct the digital data packets contained in this signal. These packets constituting the digital data stream received are then processed by a packet filter, reference number 2.8, and usually called a demultiplexer in the jargon of those skilled in the art. This filter or demultiplexer may be programmed to extract from the stream the packets satisfying certain criteria such as the value of certain fields in the packet header. This demultiplexer is used in particular for extracting a given service from the stream or for selecting the information on the service offer that is contained in the stream. This information on the offer is usually called service information by those skilled in the art.

These modules interact under the control of software stored in the read-only memory, reference number 2.6, of the device. These programs are loaded into the random access memory, reference number 2.7, for execution by the processor, reference number 2.4. The detail of the main software programs involved in the operation of the distribution gateway is described below.

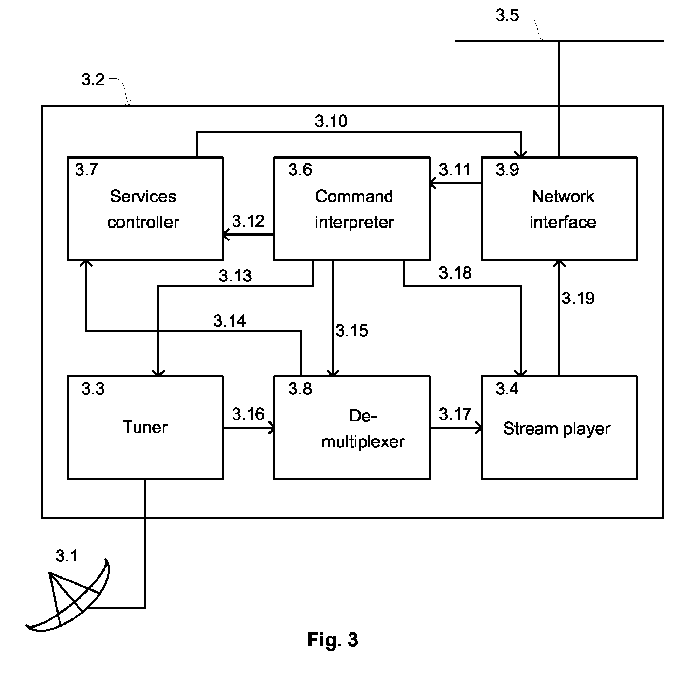

Figure 3 represents a functional diagram of a device according to the exemplary embodiment of the invention. It shows the gateway, reference number 3.2, connected to the IP network, reference number 3.5, and to the satellite antenna, reference number 3.1. It shows the network interface modules, reference number 3.9, tuner, reference number 3.3 and the demultiplexer, reference number 3.8, seen in their functional aspect. The interactions between the clients of the local network and the distribution gateway will be managed by a command interpreter, reference number 3.6. This command interpreter will receive commands or requests from the clients via the network interface, which is symbolized by the arrow, reference number 3.11. For the execution of these commands, this interpreter will have to control the tuner, arrow 3.13. It will also have to control the demultiplexer, arrow 3.15 and the stream player, reference number 3.4 arrow 3.18, which will redistribute the previously selected service over the IP network.

Under the direction of the command interpreter 3.6, the tuner will receive a stream of digital data packets which will be sent, arrow 3.16, to the demultiplexer. The latter will filter, for example, the packets belonging to a service. These packets are sent to the stream player, arrow 3.17, which for its part is responsible for sending this data packet stream over the IP network. This transmission, arrow 3.19, over the IP network may be carried out, for example, via the RTP protocol (Real Time Transport Protocol) as recommended by the DVB-IP standard. The service controller, reference number 3.7, will for its part be responsible for the management of the service information, that is to say the information on the accessible service offer. This management will be carried out under the control of the command interpreter, for example. The service controller will receive at the output from the demultiplexer, arrow 3.14, the signalling information contained in the stream and will be able to construct the list of available services that it can supply on request, arrow 3.12, to the requesting client on the IP network, arrow 3.10. The management of the available services is detailed below.

In the exemplary embodiment of the invention, the distribution gateway performs the following tasks when it is initialized.

The tuner is started and placed in a state in which it is ready to receive commands. This tuner is a widely used tuner of the type found in satellite or cable or microwave decoders. It is therefore capable of performing the usual tasks of a tuner. Of these, mention can be made of the function of scanning a range of frequencies to find those used for transmitting a service stream and the function of locking onto a given frequency by using a given polarization, a given modulation, and all the normal parameters. The tuner will also be capable of supplying the stream of digital data packets transmitted on the said frequency.

The list of services that may be received by the tuner is constructed. This list will be called the list of DVB services, a service from this list being called a DVB service. A broadcast link is organized in the following manner. The link is usually shared by several broadcasters. Each broadcaster offers a set of digital services, for example audio and/or video in the form of a set of services. These sets are broadcast by one or more transport streams. Initially, it is normal to construct the list of broadcasters that share the broadcast link. Secondly, the list of the transport streams used is constructed and finally the list of services contained in these streams can be constructed.

More precisely, in DVB, each broadcaster is identified by a unique identifier, the network identifier ("network Id") and the information concerning this can be found in a table, the NIT or Network Information Table. This table is usually found in each transport stream and contains, amongst other things, the list of the streams used for each broadcaster.

For each stream, the list of parameters will be found, such as the frequency, the modulation, the polarization and other essentials for the tuner to lock onto and receive the stream. There is also the list of services broadcast in the stream.

For each service, a certain number of information items will be found such as the name of the service, an identifier called a DVB triplet, the list of elementary audio and video stream identifiers (PIDs or Program Identifiers).

Additional service information may be available in the stream depending on the specifications of the DVB-SI (Service Information) standard.

All this information is therefore used to construct a list of available services. This information requires knowledge of the transport streams broadcast in order to be able to lock onto them and extract the payload information therefrom.

A first method of proceeding is to run through the range of potentially used frequencies in order to detect those that are used to transmit the streams. Every time a stream is detected, the pertinent information is extracted therefrom to construct the list of available services. It is a normal function of tuners. This procedure is long and monopolizes the tuner which cannot be used for the reception of services during that time.

It is also possible to construct the list of available services according to a configuration file stored in the distribution gateway for example or elsewhere on the local network. This file may be in XML or another format, the XML format having the advantage of being the format used by the DVB-IP standard for encoding the service information during the distribution of DVB services on an IP network. This method of operation is much faster, but has the risk that the information stored may be out of date relative to the actual services broadcast.

It is also possible to mix the two techniques by storing the list of services in a file but allowing this file to be updated by a regular or on-demand operation of scanning the frequencies to update it.

When the list of available services has been constructed on the broadcast link, this list must be made available on the local network. To do this, one option is to use the solution recommended by the DVB-IP standard. This standard proposes considering the list of IP services as a collection of objects. Each of these objects has, amongst other things, the following information: an identifier which may for example be the DVB triplet, a service name, the program identifiers (PIDs) of the elementary audio and video streams of the service, the multicast distribution address to which the service is distributed.

One of the problems to resolve is the definition of the multicast distribution addresses. Account must be taken of the fact that a tuner is not capable of receiving two services that are broadcast by two different transport streams at the same time. It will therefore be impossible at the distribution gateway to play these two services simultaneously on the IP network. It is possible to use this property to authorize two services belonging to different streams to use the same multicast distribution address for their distribution. However, since the tuner can simultaneously receive two services broadcast in the same transport stream, it is possible for the distribution gateway to play these two services simultaneously on the IP network. According to the exemplary embodiment, different multicast distribution addresses are used for the different services of one and the same stream.

In this manner, it is possible to determine that the maximum number of distribution addresses that must be provided for use corresponds to the maximum number of services contained in one and the same stream. A possible way of determining the multicast distribution addresses is now described and relies on the use of a set of addresses defined in a configuration file. This file is responsible for starting up the gateway and thereafter is used for the attribution of an address to each service. This attribution complies with the abovementioned rules, that is to say that the same address may be attributed to two services included in different streams while two services of the same stream will be attributed different addresses.

The command interpreter and the stream player are repetitive loops. The command interpreter listens to the network traffic, awaiting the receipt of a request intended for the distribution gateway. On receipt of such a request, it carries out the actions required for the execution of that request.

The stream player for its part awaits commands requiring the starting and stopping of a stream. On receipt of a start command, it launches an execution thread responsible for recovering the packets corresponding to the service to be sent that come to it from the tuner after filtering by the demultiplexer. These packets are assembled into RTP (Real Time Transport Protocol) type packets and then sent to the multicast distribution address attributed to the service. Once this transmission has been initialized, the stream player waits for a new start or stop command. On receipt of a stop command, the transmission of the corresponding service is stopped.

The problem of processing the service discovery and selection phase arises. This phase is described in the standard in which it is broken down into three steps. A first step describes how a client can discover the address at which a service distributor offers the information concerning its offer. A second step describes how a client, via an HTTP request for example, obtains general information on the service provider. The final step consists of finding the list of offered services. To do this, the client must send one HTTP request for each service provider. In response to this request, he will receive the list constructed during the distribution gateway initialization phase.

The solution allowing the selection of a service will now be described. Here a particular problem arises. Specifically, the standard considers that all the offered services are played permanently on the network. All these services are therefore accessible at any time and in a manner totally independent of one another. Contrary to this situation, in the case of the distribution gateway, it is clear that all the available services cannot be played at the same time. This is due to the fact that, at a given moment, only one transport stream out of the available streams may be received by the tuner. It will therefore always be impossible to play simultaneously two services belonging to two different streams without providing the distribution gateway with two or more tuners. But even when providing the gateway with several tuners, there will always be a limitation when the number of available streams exceeds the number of tuners.

A service over IP is distributed using the real time transport protocol RTP. Conventionally, when a client wants to receive an RTP stream distributed in multicast mode, he sends a subscription request called "join" to the multicast distribution address. This request is interpreted by the routing devices between the server and the client to distribute the packets sent by the server to the client. This works well in a context in which the server is constantly playing the service. In our case, in which the server plays the service on demand only, this mechanism is insufficient.

To resolve this problem, DVB-IP proposes the use of an RTSP (Real Time Streaming Protocol) request to inform a server that one of its services has been requested by a client. This command is known as the "setup" command. This "setup" command is used to allow the distribution gateway to manage the distribution of the services. In parallel, a "teardown" command will be sent when a client ceases to be interested in receiving a service. These commands comprise a reference allowing the gateway to identify the service affected by the command.

First of all, here is how a first service is selected by a first client. The client requests and constructs the list of all the available services. Amongst all these services, he selects one. A "setup" command is sent to the gateway and is interpreted by the command interpreter in order to lock the tuner onto the stream containing the requested service. The demultiplexer is programmed to filter the requested service within the stream. This service will therefore be played by the stream player on the network at the distribution address that has been attributed thereto. The client, by subscribing to this distribution address, will therefore be able to receive the requested service.

In addition, the gateway must know which clients have requested receipt of a service that it is playing on the network so as to be able to interrupt the distribution of a service when no further clients are interested in receiving it. One way of doing it is to manage, for each service played, a list of the clients from whom a "setup" command has been received for this service. So, on receipt of a "setup" command and on condition that this command can be satisfied - it will be seen that this is not always the case - the client originating the command is added to the list of clients requesting receipt of this service. The client will be withdrawn therefrom when the distribution gateway receives a "teardown" command from this client concerning this service.

What happens when a new client selects a service while the stream player is already playing a service to a first client? The first option is that the service requested by the new client is the same as the service already played for the first client. To receive the service it is sufficient for the new client to subscribe to the distribution in progress. The gateway will add this new client to the list of clients receiving the service. The second option is that the service is broadcast on the same broadcast stream. In this case, a change to the programming of the demultiplexer is used to filter the two services. Each of them will be distributed by the stream player on its own multicast distribution address. Each client is subscribed to the distribution address of the service that he wants to receive and is capable of receiving.

The third option is for the service requested by the new client to be a service broadcast on a different stream of the service requested by the first client. In this case, a first option may be to give preference to the new client. The tuner will be locked onto the new stream, the demultiplexer programmed to extract therefrom the service requested by the new client and the stream player will play this service on its multicast distribution address. As a result of this, the distribution of the first service intended for the first client will be interrupted. Another option may be to give preference to the first client and to indicate to the new client that the service that he has requested is not available due to the distribution of a first service of another stream to another client. In this case, therefore, the "setup" command fails. It is also possible to take account of the type, if it is known, of the first client to determine which policy to adopt. It is, for example, possible to give preference to clients of the recording device type as opposed to simple viewing devices based on the fact that a user having scheduled the recording of a programme does not wish to see that recording interrupted whereas a user watching a programme live will be capable of reacting to the service interruption. It is evident that any choosing policy may be adopted at this level without departing from the context of the invention.

An elegant way of solving this problem is to modify the way of constructing the list of available services so as to present to a client only the list of services actually available. In this case, when at least one service is played and therefore the tuner is locked onto a stream, the list of services proposed is restricted to the list of services available on the stream onto which the tuner is locked. When the last client subscribed to the distribution of one of the services of the stream unsubscribes from receipt of the latter, the list of available services will again be the list comprising the services of all the available streams. It is particularly in this case that the management of the list of clients subscribed to a service shows itself to be useful in order to determine when the last service used by a stream is no longer received by any client and all the services available can therefore be offered on all the streams broadcast to a client requesting them.

It is also possible to continue proposing to the first client receiving the broadcast service and, so long as he is the only client, all the available services.

It is evidently possible to extend this function to a gateway having several tuners. The list of services proposed to a client requesting them still being limited to what is really able to be distributed without interrupting a service that is already being distributed.

## Claims

1. Device for receiving digital services comprising
- means of receiving at least one set of digital services broadcast by satellite and/or by cable and/or by terrestrial transmission;
- means of connection to a local IP network;
- means of distributing at least one digital data stream containing at least one digital service on the local IP network to one or more clients connected to this network, these means of distributing at least one stream being suitable for transmitting in the distributed stream at least one service received via the reception means;
- since the reception means do not have the capability of receiving simultaneously all the services offered by the at least one set of digital services, means of selecting, at any moment, from the list of all the services offered, services that may be received without requiring the interruption of the reception of services already received.

2. Device according to Claim 1 also comprising means of presenting a list of digital services offered on the local network suited to the mode of presenting the list of offered services used on this network.

3. Device according to Claim 2, in which the means of presenting an offer of digital services comprise means of determining the list of services offered by the at least one set of digital services capable of being received via the reception means and means of adapting this list of offered services to the mode of presentation used on the local network.

4. Device according to Claim 3 also comprising means of receiving a command, called a "setup" command, from a client connected to the local network, to request the transmission over the local network of a service originating from the list of services presented by the presentation means and a command, called a "teardown" command, indicating that the client is no longer interested in the transmission of the said service.

5. Device according to Claim 4 in which, the means of presentation are suitable for presenting only the services selected via the selection means.

6. Device according to Claim 5 also having means of maintaining a list of digital services received and distributed and, for each distributed service, means of maintaining the list of clients intended to receive the said service.

7. Method of distributing at least one digital service over a local network of the IP type by a device comprising means of distributing at least one stream containing at least one digital service on the local network to one or more clients connected to this network, means of receiving at least one offer of digital services broadcast by satellite and/or by cable and/or by terrestrial transmission and the means of distributing at least one stream are suitable for transmitting in the distributed stream at least one service received via the reception means, the reception means not having the capability of receiving simultaneously all the services offered by the at least one set of digital services, comprising the following steps:
- a step of receiving at least one digital service via the said reception means;
- a step of selecting, at any time, from the list of all the offered services, services that can be received without requiring the interruption of the reception of services already received;
- a step of distributing at least one service received by the said distribution means on the local network.

8. Method according to Claim 7 in which the device also comprises means of presenting a list of digital services offered on the local network, the method also comprises a step of presenting a list of digital services offered on the local network according to the mode of presenting the services used on this network.

9. Method according to Claim 8, also comprising a step of determining the list of services offered by the at least one set of digital services and the adaptation of this list to the presentation mode used on the local network.

10. Method according to one of Claims 7 to 9, also comprising a step of receiving a command, called a "setup" command, from a client connected to the local network to request the transmission on the local network of a service originating from the list of services presented and indicated in the command.

11. Method according to Claim 10, also comprising, on receipt of the "setup" command, a step of maintaining a list of digital services received and distributed and, for each service distributed, a step of maintaining the list of clients intended to receive the said service.

12. Method according to Claim 11, also comprising, on receipt of the "setup" command, a step of controlling the reception means to receive the requested service and a step of distributing this service on the local network.

13. Method according to Claim 11, also comprising, on receipt of the "setup" command, a step of verifying that, in the case in which at least one previous service is already received by the reception means and distributed by the distribution means, the reception means can be controlled so as to allow the additional reception of the requested service and of the at least one previous service received and, if this test is negative, to signify the failure of his command to the client originating the "setup" command.

14. Method according to Claim 11, also comprising a step, during the determination of the list of services offered by the at least one set of digital services and, in the case in which at least one service is already received by the reception means and distributed by the distribution means, of selecting from this list the only services that can be received in addition to the at least one service already received.

15. Method according to one of Claims 7 to 9 also comprising a step of receiving a command, called a "teardown" command, from a client connected to the local network and intended to receive at least one distributed digital service, indicating that he ceases to be the intended recipient of the digital service indicated in the command.

16. Method according to Claim 15, also comprising a step, on receipt of the "teardown" command, of maintaining a list of received and distributed digital services, and, for each distributed service, a step of maintaining the list of clients intended to receive the said service.
